# FASCICULE DE BREVET EUROPEEN

(11) **EP 0 729 092 B1**
(45) Date de publication et mention de la délivrance du brevet: **30.05.2001**
(21) Numéro de dépôt: 96400334.7
(22) Date de dépôt: 19.02.1996
(51) Int. Cl.: G06F 9/318, G06F 9/38

(54) **Procédé et dispositif de commande simultanée des états de contrôle des unités d'exécution d'un processeur programmable à architecture du type pipeline**
Verfahren und Vorrichtung zur simultanen Steuerung der Steuerzustände von Verarbeitungseinheiten eines programmierbaren Pipelineprozessors
Method and apparatus for simultaneously controlling the control status of the execution units of a programmable pipelined processor

(30) Priorité: 23.02.1995 FR 9502132
(43) Date de publication de la demande: 28.08.1996
(73) Titulaire: FRANCE TELECOM, 75015 Paris (FR)
(72) Inventeur: Dufal, Frédéric, F-38100 Grenoble (FR)
(74) Mandataire: Casalonga, Axel

(56) Documents cités:
- EP-A- 0 306 920
- WO-A-80/01423
- US-A- 4 173 041
- US-A- 4 187 539
- US-A- 4 228 497
- 4TH ANNUAL SYMPOSIUM ON COMPUTER ARCHITECTURE, 23 - 25 Mars 1977, LONG BEACH,US, pages 63-69, XP002003672 KOGGE: "The microprogramming of pipelined processors"

## Description

L'invention concerne la commande simultanée des états de contrôle d'une pluralité d'unités d'exécution d'un processeur programmable à architecture du type pipeline, à partir d'un code-programme stocké dans une mémoire-programme, de façon à notamment minimiser la taille du code-programme.

L'invention s'applique avantageusement mais non limitativement à des architectures matérielles dédiées à la mise en oeuvre de traitements numériques intensifs, relativement réguliers et répétitifs, par exemple en traitement d'images animées, en particulier dans des applications de communication multimédia.

Classiquement les instructions d'un processeur programmable codent les états de contrôle de celui-ci, ces états de contrôle fixant les configurations de fonctionnement du chemin de données.

Dans tout ce qui suit, l'expression "flux de données" doit être interprétée de façon large, désignant éventuellement une seule donnée reçue par le processeur à un cycle d'horloge considéré, mais généralement un ensemble de données synchrones reçu par le processeur audit cycle d'horloge, ainsi que la ou les données issues de ces données reçues après leurs traitements successifs par les unités d'exécution. Par ailleurs, bien que dans certains cas la totalité d'un flux de données est reçue par la première unité d'exécution (compte tenu de la configuration du pipeline), il n'est pas exclu que certaines données d'un même flux puisse être reçues simultanément par plusieurs unités d'exécution.

Une architecture du type pipeline est, selon une dénomination habituellement utilisée par l'homme du métier, une architecture dans laquelle les traitements relatifs à un flux de données entrant s'effectuent séquentiellement dans différentes unités d'exécution, compte tenu de la configuration du "pipeline" ou chemin de données, et dans laquelle il n'est pas nécessaire d'attendre la fin des traitements relatifs à un flux de données pour débuter les traitements relatifs au flux de données suivant.

L'état de contrôle global du processeur varie à chaque cycle du signal d'horloge à partir duquel il est cadencé. Lorsque les instructions du code-programme contenues dans la mémoire-programme sont destinées à contrôler simultanément les états de contrôle de plusieurs ressources matérielles distinctes, communément désignées sous le terme générique d'unités d'exécution, l'état de contrôle varie localement à chaque cycle d'horloge en fonction des différentes unités d'exécution. Ces unités d'exécution peuvent être par exemple des unités arithmétiques et logiques, des multiplieurs, des additionneurs ou encore des moyens d'interconnexion commandables entre les éléments précédemment mentionnés, tels que des multiplexeurs.

Une commande de tous les états de contrôle possibles à partir d'une succession de mots d'instruction constitué chacun par les mots de contrôle destinés à commander respectivement, directement et simultanément les différentes unités d'exécution compte tenu en outre de l'architecture pipelinée, serait possible mais conduirait à une taille du code-programme très importante, et par conséquent à l'utilisation d'une mémoire-programme volumineuse.

L'invention a pour but d'apporter une solution à ce problème et de minimiser la taille-mémoire du code-programme à partir duquel sont commandés simultanément les états de contrôle des unités d'exécution, et donc de réduire l'encombrement matériel de la mémoire-programme.

Outre le fait de permettre une minimisation de la taille-mémoire du code-programme, l'invention permet de pouvoir exploiter directement du parallélisme de données dans des traitements numériques intensifs tout en créant la possibilité de traitements pipelines variables, c'est-à-dire pour lesquels la nature des étapes et la configuration du pipeline peuvent changer à chaque nouvelle instance élémentaire de calcul.

Un tel avantage n'existe pas dans les techniques classiques d'architectures, telles que les architectures de processeurs RISC, les architectures à mot d'instruction très long (VLIW) ou les unités de traitement vectoriel.

L'invention propose donc un procédé de commande simultanée des états de contrôle d'une pluralité d'unités d'exécution d'un processeur programmable, lesdites unités étant agencées selon une architecture du type pipeline, ou pipelinée, pour effectuer sur chaque flux de données reçu par le processeur des traitements successifs au rythme d'un signal d'horloge compte tenu desdits états de contrôle définis pour ledit flux de données par des mots de contrôle. Dans ce procédé, on stocke dans une première partie d'une mémoire-programme, une succession de mots de programme dont chacun est constitué d'un bloc de premiers mots d'instruction mutuellement indépendants et respectivement affectés à la pluralité d'unités d'exécution pour un flux de données considéré, ou d'un deuxième mot d'instruction affecté à au moins une unité d'exécution. Le nombre des deuxièmes mots d'instruction est inférieur à celui desdits blocs, et chaque bloc a une taille inférieure à la somme des tailles respectives des mots de contrôle. On extrait séquentiellement de cette première partie de la mémoire-programme, au rythme du signal d'horloge, les différents mots de programme. On prévoit une pluralité de moyens de stockage élémentaires affectés respectivement à la pluralité d'unités d'exécution. On analyse séquentiellement au rythme du signal d'horloge, l'affectation de chaque deuxième mot d'instruction extrait et on met à jour le contenu du ou des moyens de stockage élémentaires correspondants à partir de ce deuxième mot d'instruction. On élabore séquentiellement chacun des mots de contrôle correspondant au flux de données considéré, à partir de la combinaison selon une relation logique affectée spécifiquement à chaque unité d'exécution, du contenu du moyen de stockage élémentaire affecté à cette unité d'exécution et du premier mot d'instruction correspondant du bloc extrait ou d'un premier mot supplémentaire d'instruction de contenu préétabli. On minimise ainsi la taille de la mémoire-programme.

L'invention prévoit donc notamment de structurer le code-programme en instructions générales (blocs de premiers mots d'instruction) et en directives (deuxièmes mots d'instruction). Chaque instruction générale est associée à un flux de données reçu par le processeur et comporte des instructions respectivement affectées aux unités d'exécution pour leurs traitements respectifs quant à ce flux. Chaque instruction contenu dans une instruction générale extraite de la mémoire est alors valable pour un seul cycle d'horloge tandis que le contenu des moyens de stockage élémentaires reste valable en général pour une durée plus longue couvrant plusieurs cycles d'horloge, puisqu'il est mis à jour par les directives qui sont en nombre inférieur aux instructions générales.

Au sens de la présente invention, l'expression "mettre à jour" doit s'interpréter dans un sens très large englobant notamment une substitution d'au moins certains bits du contenu du moyen de stockage élémentaire par certains bits au moins de la directive considérée, ou encore la modification du contenu du moyen de stockage élémentaire par une fonction logique définie par la directive, par exemple une inversion de bits.

Chaque mot de contrôle affecté à une unité d'exécution est alors obtenu à partir de la combinaison logique d'une instruction et du contenu d'un moyen de stockage. Là encore, le terme "combinaison" doit être pris dans un sens très général, comportant une simple juxtaposition de bits et/ou une concaténation de bits et/ou une véritable combinaison selon une fonction logique d'une partie au moins des bits des instructions et directives.

La taille des instructions générales, et avantageusement de tous les mots de programme du code-programme, qui est inférieure à la somme des tailles élémentaires des mots de contrôle nécéssaires à la commande des unités d'exécution, ainsi qu'un nombre de directives inférieure à celui des instructions générales, conduisant ainsi à une "mise en facteur temporelle" de ces directives, permettent de compacter le taille-mémoire du code-programme.

Par ailleurs, en combinaison avec cette mise en facteur temporelle, le fait de prévoir que chaque instruction générale comporte toutes les instructions des unités d'exécution valables pour un même flux de données, et donc puissent être extraites par un même mot d'adressage, contribue encore à minimiser la taille de la mémoire-programme.

Le caractère séquentiel de l'analyse de l'affectation de chaque directive ainsi que de l'élaboration des mots de contrôle s'éffectue avantageusement en retardant temporellement respectivement la prise en compte des instructions et des directives selon des retards différents pour chaque unité d'exécution compte tenu de sa position dans l'architecture pipelinée.

En présence d'un mot de programme différent d'un bloc de premiers mots d'instruction, on élabore de préférence les mots de contrôle à partir de la combinaison, selon lesdites relations logiques prédéterminées, du premier mot supplémentaire d'instruction de contenu préétabli et des contenus des moyens de stockage élémentaires.

En pratique cette instruction préétablie est choisie, compte tenu de la relation logique de combinaison, pour conduire après combinaison avec le contenu du ou des moyen de stockage élémentaire à l'obtention d'un ou de plusieurs mots de contrôle spécifiant une absence d'action par la ou les unités d'exécution concernées.

Selon un mode mise en oeuvre de l'invention, on prévoit dans la mémoire-programme une deuxième partie contenant des deuxièmes mots supplémentaires d'instruction affectés à au moins une unité d'exécution. En présence de certains au moins des mots de programme extraits différents d'un deuxième mot d'instruction, on extrait de la deuxième partie de la mémoire-programme un deuxième mot supplémentaire d'instruction dont on analyse séquentiellement l'affectation et à partir duquel on met à jour le contenu du ou des moyens de stockage élémentaires correspondants.

Un tel mode de mise en oeuvre permet de minimiser les temps morts au niveau de la fourniture d'une directive en général. Par ailleurs, il est particulièrement avantageux de placer dans cette deuxième partie de la mémoire-programme des directives préenregistrées qui sont amenées à intervenir de façon répétitive. On évite alors leur stockage répétitif dans la première partie de la mémoire-programme ce qui contribue encore à optimiser la taille-mémoire du code-programme.

Par ailleurs, il peut également s'avérer particulièrement avantageux de modifier au moins une partie du contenu de l'un au moins des deuxièmes mots d'instruction ou des deuxièmes mots suplémentaires d'instruction extrait de la mémoire-programme avant son utilisation aux fins de mise à jour du contenu d'un ou de plusieurs moyens de stockage élémentaires.

Une telle modification, lorsqu'elle se traduit par une substitution de certains bits des directives par des bits provenant de paramètres extérieurs au processeur, permet de pouvoir aisément paramétrer la commande des états de contrôle des unités d'exécution par des données externes sans prévoir de réalisation complexe de moyens matériels supplémentaires.

Selon un mode de mis en oeuvre avantageux du procédé selon l'invention, on répartit les mots de programme dans une première sous-partie et dans une deuxième sous-partie de la première partie de la mémoire-programme. Chaque bloc de premiers mots d'instruction est constitué d'une part, par un premier sous-bloc stocké dans ladite première sous-partie et contenant des premiers mots d'instruction respectivement affectés à un premier groupe d'unités d'exécution et d'autre part, par un deuxième sous-bloc stocké dans ladite deuxième partie et contenant des premiers mots d'instruction respectivement affectés aux autres unités d'exécution. On adresse séquentiellement la première sous-partie de la mémoire-programme par des mots d'adressage successifs tandis que l'on adresse séquentiellement la deuxième sous-partie de la mémoire-programme par les mêmes mots d'adressage successifs mais retardés temporellement. On met à jour certains des moyens de stockage élémentaires affectés auxdites autres unités d'exécution à partir d'une combinaison logique d'un deuxième mot d'instruction issu de la première sous-partie et d'un deuxième mot d'instruction issu de la deuxième sous-partie.

Un tel mode de mise en oeuvre permet notamment une économie de moyens matériels en particulier au niveau des retards temporels permettant l'analyse séquentielle d'une directive et l'élaboration séquentielle des mots de contrôle.

L'invention a également pour objet un dispositif de commande simultanée des états de contrôle d'une pluralité d'unités d'exécution d'un processeur programmable, lesdites unités étant agencées selon une architecture pipelinée pour effectuer sur chaque flux de données reçu par le processeur des traitements successifs au rythme d'un signal d'horloge compte tenu desdits états de contrôle définis pour ledit flux de données par des mots de contrôle.

Ce dispositif comprend une mémoire-programme comportant une première partie comportant une succession de mots de programme dont chacun est constitué d'un bloc de premiers mots d'instruction mutuellement indépendants et respectivement affectés à la pluralité d'unités d'exécution pour un flux de données considéré, ou d'un deuxième mot d'instruction affecté à au moins une unité d'exécution. Le nombre des deuxièmes mots d'instruction est inférieur à celui desdits blocs et chaque bloc a une taille inférieure à la somme des tailles respectives des mots de contrôle.

Il est également prévu des moyens de commande, connectés entre la mémoire-programme et les unités d'exécution, et comportant des moyens pour extraire séquentiellement de la première partie de la mémoire-programme les différents mots de programme au rythme du signal d'horloge.

Les moyens de commande comprennent également une pluralité de moyens de stockage élémentaires affectés respectivement à la pluralité d'unités d'exécution, ainsi que des moyens pour analyser séquentiellement au rythme du signal d'horloge, l'affectation de chaque deuxième mot d'instruction extrait.

Des moyens de mise à jour élémentaires sont aptes à mettre à jour le contenu du ou des moyens de stockage élémentaires correspondants à partir de ce deuxième mot d'instruction. Des moyens d'élaboration sont aptes à élaborer séquentiellement chacun des mots de contrôle correspondant au flux de données considéré, à partir de la combinaison selon une relation logique affectée spécifiquement à chaque unité d'exécution, du contenu du moyen de stockage élémentaire affecté à cette unité d'exécution et du premier mot d'instruction correspondant du bloc extrait ou d'un premier mot supplémentaire d'instruction de contenu préétabli.

On minimise ainsi la taille de la mémoire-programme.

Selon un mode de réalisation de l'invention, les moyens d'élaboration comportent une pluralité de moyens d'élaboration élémentaires respectivement connectés à la pluralité d'unités d'exécution. Les moyens de commande comportent des premiers moyens de retard temporel élémentaires respectivement connectés entre la sortie de la mémoire-programme et certains des moyens d'élaboration élémentaires pour délivrer séquentiellement à ces moyens d'élaboration élémentaires les premiers mots d'instruction correspondants. Les moyens d'analyse comportent des deuxièmes moyens de retard temporel élémentaires respectivement connectés entre la sortie de la mémoire-programme et certains des moyens de stockage élémentaires.

Chaque mot de programme comporte avantageusement un identifiant permettant de l'identifier en tant que bloc de premiers mots d'instruction ou en tant que deuxième mot d'instruction, ainsi qu'une partie utile contenant ce bloc de premiers mots d'instruction ou ce deuxième mot d'instruction. Les moyens de commande comportent alors des moyens de sélection, commandés par l'identifiant de chaque mot de programme, et comportant une première entrée pour recevoir les mots de programme, une première sortie connectée aux moyens d'élaboration élémentaires, et une deuxième sortie connectée aux moyens de stockage élémentaires.

La mémoire-programme comporte avantageusement une deuxième partie contenant des deuxièmes mots supplémentaires d'instruction, et les moyens de sélection comportent une autre entrée connectée à la sortie de la deuxième partie de la mémoire-programme.

Certains deuxièmes mots d'instruction ou certains deuxièmes mots supplémentaires d'instruction peuvent comporter une zone de désignation d'une ou des unités à laquelle ils sont affectés, une zone d'état ou de désignation secondaire, et une partie utile. Le moyen de stockage élémentaire correspondant à ladite zone de désignation comporte plusieurs sous-moyens de stockage élémentaires correspondant aux différentes valeurs possibles de la zone d'état, et les moyens de mise à jour élémentaires comportent des sous-moyens de mise à jour aptes à mettre à jour le contenu du sous-moyen de stockage élémentaire désigné par la zone d'état à partir de la partie utile de ce deuxième mot d'instruction ou de ce deuxième mot supplémentaire d'instruction.

Selon un mode de réalisation de l'invention, la première partie de la mémoire-programme comporte une première et une deuxième sous-parties, et les moyens de commande comportent des moyens de retard temporel amont connectés sur l'entrée d'adressage de la deuxième sous-partie.

Selon un mode de réalisation de l'invention, l'un au moins des mots de contrôle comporte une première partie contenant plusieurs bits issus directement des bits contenus dans un moyen de stockage élémentaire et une deuxième partie dont les bits résultent d'une combinaison du contenu de ce moyen de stockage élémentaire et d'un premier mot d'instruction. L'unité d'exécution contrôlée par ce mot de contrôle comporte des sous-unités d'exécution contrôlées par des sous-mots de contrôle comportant chacun un bit différent de la première partie du mot de contrôle ainsi que les bits de la deuxième partie du mot de contrôle.

On peut ainsi contrôler simultanément et indépendamment plusieurs unités d'exécution à partir d'un seul mot de contrôle élaboré.

D'autres avantages et caractéristiques de l'invention apparaîtront à l'examen de la description détaillée de modes de mise en oeuvre et de réalisation de l'invention, nullement limitatifs, et illustrés sur les dessins annexés sur lesquels :
- la figure 1 illustre schématiquement un premier mode de réalisation d'un dispositif selon l'invention permettant un premier mode de mise en oeuvre du procédé selon l'invention,
- la figure 2 illustre plus en détail le mode de mise en oeuvre et de réalisation de la figure 1,
- la figure 3 illustre plus en détail une variante du mode de mise en oeuvre de la figure 2,
- la figure 4 illustre schématiquement un mode de réalisation d'une substitution de paramètres extérieurs dans une directive,
- la figure 5 illustre schématiquement un mode de réalisation du dispositif selon l'invention plus particulièrement applicable aux machines SIMD ("Single Instruction Multiple Data"),
- la figure 6 illustre schématiquement un deuxième mode de réalisation et de mise en oeuvre de l'invention, et
- la figure 7 illustre une configuration d'un code-programme de la mémoire-programme ne rentrant pas dans le cadre de l'invention.

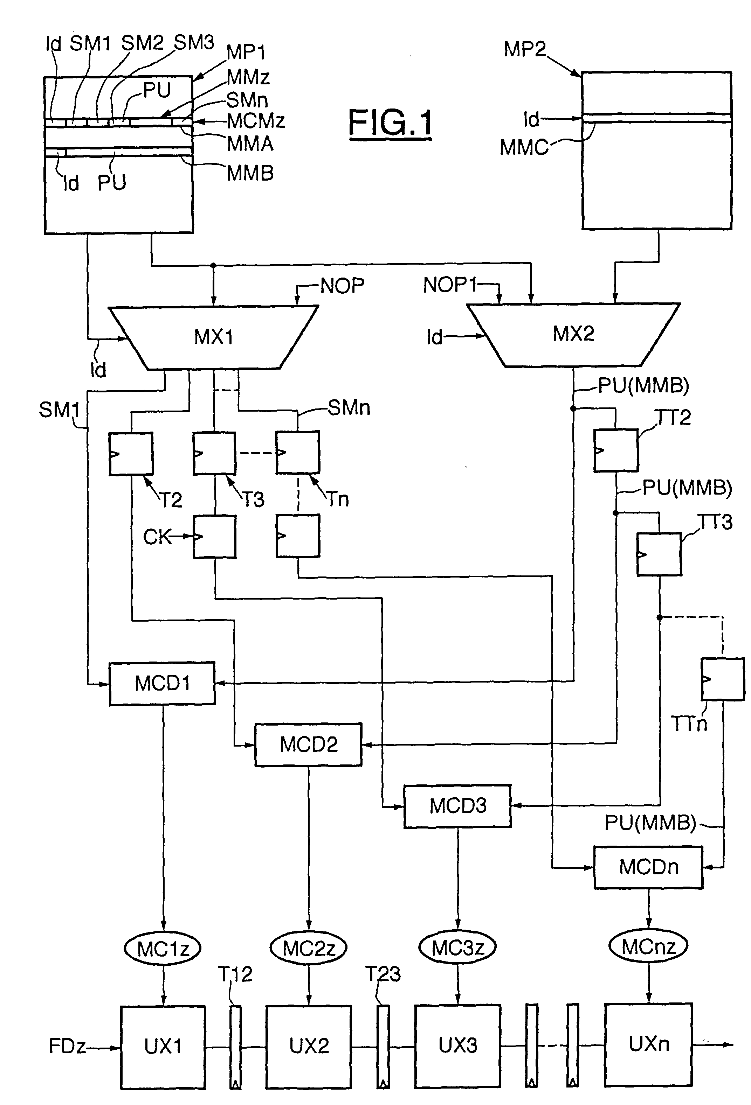

Tel qu'illustré sur la figure 1, le dispositif selon l'invention comporte une mémoire programme formée d'une mémoire principale MP1 et d'une mémoire annexe optionnelle MP2. En pratique, ces deux mémoires sont distinctes mais peuvent être deux parties d'une même mémoire physique.

La mémoire MP1 comporte une succession de mots de programme MM à partir desquels seront élaborés séquentiellement, au rythme d'un signal d'horloge CK, certains au moins des différents groupes de mots de contrôle MC1-MCn destinés à fixer les différents états de contrôle des différentes unités d'exécution UX1, UXn du processeur programmable.

Ces unités d'exécution UX1-UXn sont ordonnées selon une architecture pipelinée linéaire. Plus précisémment, deux unités adjacentes UXi, UXj sont mutuellement connectées par l'intermédiaire d'un retard temporel Tij, tel qu'une bascule D.

Bien entendu l'homme du métier comprendra, que dans tout le texte, le terme "bascule" doit être pris globalement comportant en fait autant de bascules D que de bits du mot retardé.

Pour un flux de données considéré FDz, reçu par le processeur, en l'espèce par la première unité d'exécution UX1, chacune de ces unités d'exécution a ses états de contrôle définis par des mots de contrôle MC1z-MCnz.

Bien entendu, l'homme du métier aura compris que, compte tenu du traitement pipeliné du flux de données FDz, les n mots de contrôle MCiz seront respectivement délivrés aux n unités d'exécution à des cycles d'horloge successifs.

L'une des caractéristiques de l'invention réside ici plus particulièrement dans l'élaboration des mots de contrôle à partir des mots de programme contenus dans la mémoire-programme, étant entendu que la valeur proprement dite des bits des mots de contrôle, définissant de façon explicite les états de contrôle d'un processeur programmé d'une façon spécifique pour une application spécifique, dépendent des valeurs des bits des différents mots de programme, définies par l'utilisateur lors de la programmation effective du processeur pour ladite application spécifique.

Une autre caractéristique de l'invention réside, comme on le verra plus en détail ci-après, dans l'extraction à partir d'un seul mot de commande MCMz, issu par exemple d'un pointeur d'adresse, d'instructions mutuellement indépendantes respectivement affectées, pour le flux FDz, à chacune des unités d'exécution.

Cette élaboration particulière des mots de contrôle ainsi que la structure des mots de programme contribuent à optimiser la longueur du code-programme contenu dans la mémoire programme, et donc la taille de cette mémoire-programme.

Chaque mot de programme MMz peut être soit un bloc MMA de premiers mots d'instruction ou un deuxième mot d'instruction MMB, dont on explicitera la signification ci-après. En pratique, chaque mot de programme MMz comporte un identifiant Id, codé sur un ou plusieurs bits, et permettant d'identifier le mot de programme en tant que bloc de premiers mots d'instruction ou en tant que deuxième mot d'instruction, ainsi qu'une partie utile PU comportant notamment un champ de paramètres dont la valeur sera définie par l'utilisateur lors de la programmation du processeur.

Chaque bloc de premiers mots d'instruction MMA représente une instruction générale tandis que chaque deuxième mot d'instruction MMB représente une directive.

La partie utile PU de chaque instruction générale est donc constituée d'une pluralité de premiers mots d'instruction (instructions) SM1-SMn affectés respectivement aux différentes unités d'exécution UX1-UXn.

Une directive va être utilisée pour mettre à jour le contenu d'un ou de plusieurs moyens de stockages élémentaires tels que des registres, par l'intermédiaire de moyens de mise à jour. Dans l'exemple qui va être décrit, la notion de "mise à jour" s'analyse comme un stockage de certains au moins des bits d'une directive dans le ou les registres élémentaires d'une façon à modifier ainsi leur contenu.

Les différents mots de contrôle vont alors être d'une façon générale élaborés à partir des instructions délivrées par la mémoire MP1 et à partir du contenu des registres élémentaires. Cette élaboration s'effectue par des moyens logiques d'élaboration élémentaires respectivement affectés à chaque unité d'exécution et mettant en oeuvre une relation logique prédéterminée réalisée par exemple par synthèse logique.

Ces différents moyens logiques d'élaboration élémentaires sont incorporés au sein de moyens de commande élémentaires MCD1-MCDn.

Chaque moyen de commande élémentaire MCDi possède une première entrée pour recevoir l'instruction affectée à l'unité d'exécution correspondante, ainsi qu'une deuxième entrée pour recevoir une directive.

De façon à diriger une directive et une instruction vers les entrées correspondantes des moyens de commande MCDi, et par conséquent des moyens d'élaboration élémentaires, il est prévu d'une façon générale, des moyens de sélection commandés à partir de l'identifiant Id de chaque mot de programme MMz. Ces moyens de sélection sont représentés ici par deux multiplexeurs MX1 et MX2 dont l'une des entrées respective est par exemple câblée directement à la mémoire MP1 de façon à recevoir la partie utile du mot de programme. Par ailleurs, la zone d'identifiant de chaque mot de programme est câblée directement, éventuellement par l'intermédiaire d'un décodeur, à l'entrée de commande de ces multiplexeurs MX1 et MX2. Ainsi, lorsqu'un mot de programme MMz est extrait de la mémoire MP1 à chaque cycle d'horloge, par l'intermédiaire du pointeur d'adresse, la partie utile de ce mot de programme est, en fonction de l'identifiant, soit utilisée pour mettre à jour un moyen de stockage élémentaire, s'il s'agit d'une directive, soit directement envoyée, par câblage par exemple, aux entrées correspondantes des moyens d'élaboration élémentaires, s'il s'agit d'une instruction générale.

En présence d'un mot de programme extrait différent d'une instruction générale, on prévoit alors la délivrance, aux moyens de commande d'une instruction supplémentaire préétablie NOP à partir de laquelle vont être élaborés, en combinaison avec les contenus de registres élémentaires, les différents mots de contrôle. En pratique, cette instruction NOP, dont les valeurs des bits sont figées de façon matérielle, par exemple par connexion à la masse ou à l'alimentation, est choisie de façon que la combinaison de cette instruction NOP avec les contenus des registres, par les moyens d'élaboration, conduise à l'élaboration de mots de contrôle prédéterminés et spécifiant une absence d'action pour la ou les unités d'exécution concernées.

De même, en présence d'un mot de programme extrait et différent d'une directive, il est prévu dans ce mode de réalisation, de façon câblée par exemple, la délivrance en entrée du multiplexeur MX2 d'une directive prédéterminée NOP1 se traduisant par une non mise à jour des registres élémentaires, ou d'une directive préenregistrée.

La mémoire MP2 contient quant à elle des deuxièmes mots d'instruction supplémentaires MMC (directives préenregistrées). En pratique, il n'est pas nécessaire de prévoir un identifiant pour ces mots MMC puisqu'il s'agit uniquement de directives. La longueur de ces mots est donc inférieure à la longueur des mots de programme MMz contenus dans la mémoire MP1. La sortie de cette mémoire MP2 est connectée au multiplexeur MX2.

Il est ainsi possible, en présence d'un mot de programme MMz extrait de la mémoire MP1, et différent d'une directive, de délivrer tout de même éventuellement une directive préenregistrée MMC de façon à mettre à jour un ou plusieurs registres élémentaires. L'adressage de cette mémoire MP2 peut s'effectuer à partir de l'identifiant d'un mot de programme extrait de la mémoire MP1.

La délivrance de ces directives préenregistrées MMC n'est pas effectuée systématiquement lors de l'extraction d'une instruction générale MMA de la mémoire MP1, mais l'est seulement pour certaines de ces instructions générales MMA. Cette différenciation s'effectue par exemple au moyen de l'identifiant Id. Ainsi, si l'on suppose que l'identifiant est codé sur au moins 2 bits, et que l'on affecte la valeur 0 à une directive et la valeur 1 ou une valeur supérieure ou égale à 2 à une instruction générale, on peut par exemple décider que la délivrance des directives préenregistrées en vue de mettre à jour l'un au moins des registres élémentaires ne se fera que simultanément à l'extraction d'instructions générales dont l'identifiant a une valeur supérieure ou égale à 2.

L'homme du métier aura compris que puisque les directives MMB sont en nombre inférieur à celui des instructions générales MMA, le contenu des registres élémentaires peut rester inchangé pendant plusieurs cycles d'horloge. En fait, on réalise ainsi une mise en facteur temporelle des directives dans la mémoire-programme, celles-ci définissant alors des états rémanents pour les différentes unités d'exécution, valables pendant plusieurs cycles d'horloge. Ceci contribue encore à réduire la longueur du code programme contenu dans la mémoire programme, car, dans un cas classique, il aurait été nécessaire de répéter plusieurs fois l'information apportée par ces directives dans la mémoire programme.

Compte tenu du traitement pipeliné des flux de données, la délivrance des instructions et des directives aux différents moyens de commande MCDi s'effectue par l'intermédiaire de retards temporels.

Plus précisément, la première entrée de chaque moyen de commande MCDi, affecté à l'unité d'exécution UXi de rang i, est connectée à celle des sorties du multiplexeur MX1 délivrant l'instruction destinée à UXi, par l'intermédiaire de i-1 (i≥1) retards temporels tels que des bascules D. Les différents groupes de retards temporels respectivement affectés aux moyens de commande MCD2-MCDn sont dans l'exemple décrit désignés sous les références globales T2-Tn, et correspondant à chaque mot d'instruction d'un bloc de mots d'instruction (pour i≥2).

Par ailleurs, il est prévu une cascade d'autres retards temporels TT2-TTn dont les sorties respectives sont connectées aux moyens de commande MCD2-MCDn permettant d'alimenter tour à tour chaque MCDi à partir d'une même directive initiale.

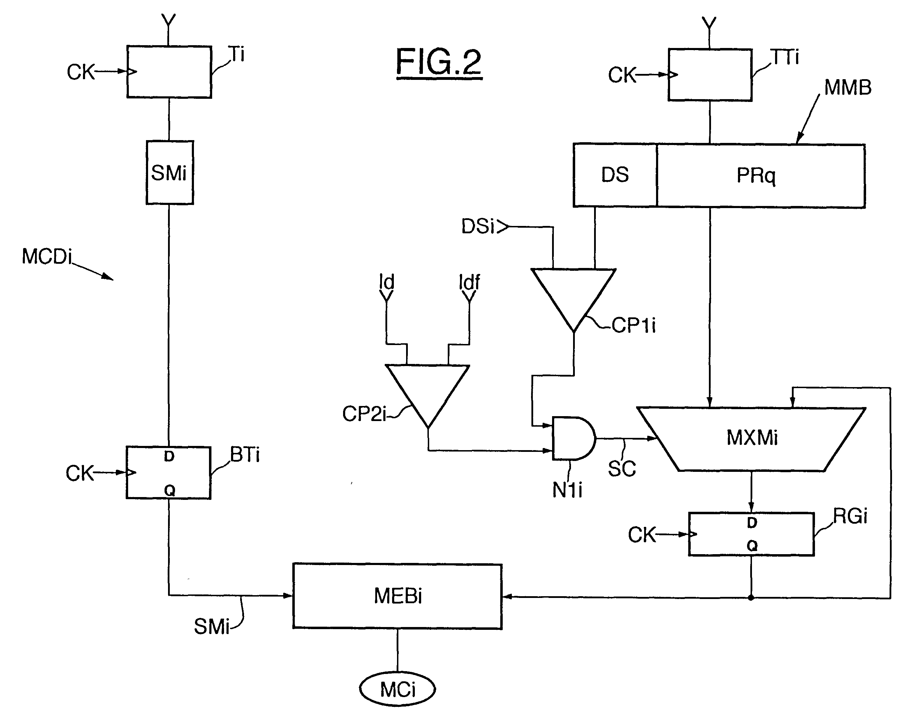

On va maintenant décrire plus en détail, en se référant plus particulièrement à la figure 2, la structure des moyens de commande élémentaire MCDi.

La partie utile PU de chaque deuxième mot d'instruction, ou de chaque deuxième mot d'instruction supplémentaire MMB (directive, ou directive préenregistrée), comporte une zone de désignation DS désignant effectivement l'une au moins des unités d'exécution à laquelle cette directive est affectée, ainsi qu'un champ de paramètres PRq. A chaque unité d'exécution UXi est alors affectée à un moyen d'élaboration élémentaire MEBi mettant en oeuvre une combinaison logique spécifique à cette unité d'exécution. Bien entendu plusieurs de ces moyens MEBi peuvent être identiques.

De même, à chaque unité d'exécution UXi est affectée un moyen de stockage élémentaire RGi connecté à des moyens de mise à jour élémentaire MXMi formés ici d'un multiplexeur.

Chaque premier mot d'instruction SMi est délivré, éventuellement par l'intermédiaire d'une bascule BTi, à l'entrée correspondante du moyen MEBi, par exemple par câblage. Le champ de paramètres PRq de chaque directive extraite est connecté via les retards TTi, également par câblage, à l'une des entrées de chaque multiplexeur MXMi affecté à chaque registre RGi.

Il convient de noter ici que la barrière temporelle BTi n'est indispensable dans le dispositif selon l'invention, que lorsque ce dernier comporte effectivement une mémoire annexe MP2.

Par ailleurs, le signal de commande SC de chaque multiplexeur MXMi est issu par exemple d'une porte logique ET référencée N1i dont l'une des entrées est reliée à la sortie d'un comparateur CP1i comparant la valeur de la zone de désignation DS avec la valeur DSi de la zone de désignation spécifiquement associée au registre RGi. L'autre entrée de la porte ET est connectée à la sortie d'un autre comparateur CP2i comparant la valeur de l'identifiant du mot de programme extrait de la mémoire MP1 avec un identifiant prédéfini Idf correspondant à la directive NOP1.

Si la zone de désignation DS de la directive MMB correspond à DSi et si cette directive MMB n'est pas en fait une directive NOP1, le champ de paramètres PRq est stocké dans le registre élémentaire RGi.

Si par contre la zone DS ne correspond pas à DSi le multiplexeur MXMi est commuté sur son autre entrée de façon à réécrire dans le registre RGi la valeur précédente (le registre RGi n'est donc pas mis à jour et son contenu reste inchangé). Le champ de paramètres PRq sera alors délivré au registre élémentaire correspondant à l'unité d'exécution dont la valeur DS correspond à celle contenue dans la directive.

En fonctionnement, les différentes instructions SM1-SMn extraites du mot de mémoire courant MMz par le mot de commande MCMz, sont respectivement successivement délivrées aux moyens de commande MCD1-MCDn par l'intermédiaire des moyens de retard T2-Tn. Ainsi, les mots de contrôle MC1z-MCMz, relatifs au flux FDz, sont élaborés séquentiellement par le dispositif alors que les instructions SM1-SMn sont extraites simultanément de la mémoire MP1.

De même, lorsqu'une directive est extraite de la mémoire MP1, l'étude de son affectation, c'est-à-dire l'étude de la zone de désignation DS, est effectuée séquentiellement en raison de la présence des retards TT2-TTn.

Ainsi, selon l'invention, si une directive est extraite avant une instruction générale dans le séquencement du programme, les effets de cette directive sur l'état de contrôle de chaque unité d'exécution se font sentir avant les effets de l'instruction relative à cette unité d'exécution. De même, si une directive est extraite après une instruction générale dans le séquencement du programme, les effets de cette directive sur l'état de contrôle de chaque unité d'exécution se font sentir après que les effets de l'instruction relative à cette unité d'exécution.

En d'autres termes, l'invention permet notamment de retarder les directives afin que dans chaque unité d'exécution, l'effet de cette directive sur l'état de contrôle local soit bien synchronisé avec l'effet de l'instruction relative à cette unité d'exécution.

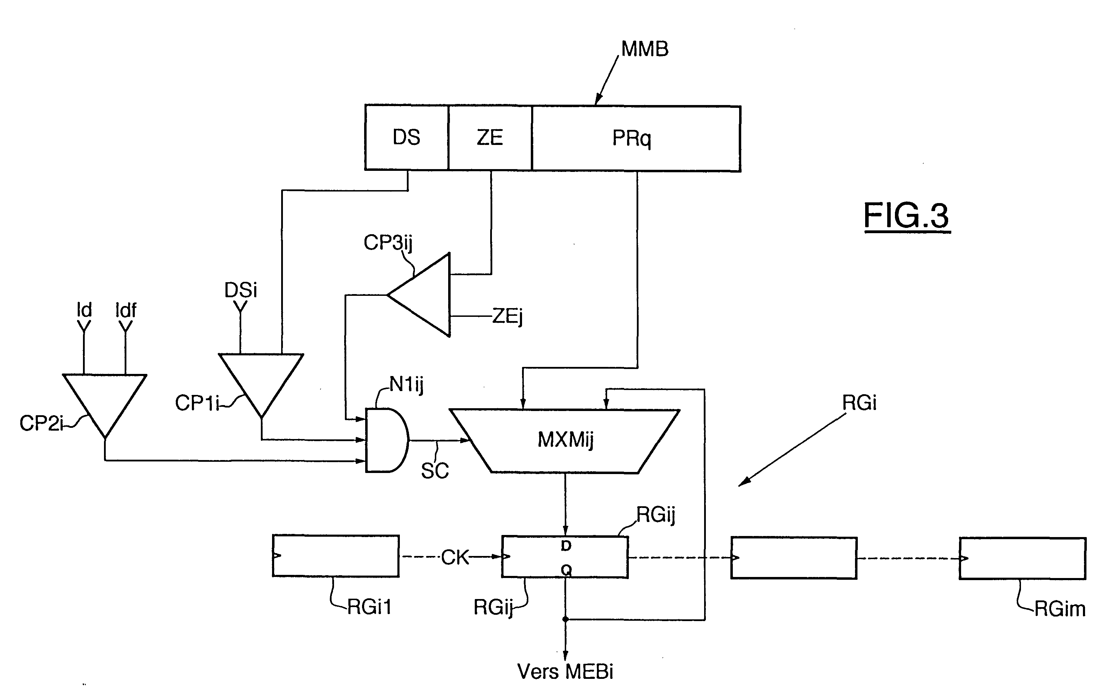

En variante, comme illustré sur la figure 3, certains au moins des registres élémentaires RGi peuvent être décomposés en plusieurs sous-registres élémentaires RGi1-RGim. Le multiplexeur MXMi se décompose alors en une pluralité de sous-multiplexeurs MXMij respectivement affectés à chacun des sous-registres élémentaires. La partie utile d'une directive, ou d'une directive préenregistrée, MMB comporte alors outre la zone de désignation DS et le champ de paramètres PRq une zone d'état ZE qui va être comparée, dans un comparateur, CP3ij à la valeur ZEj affectée au sous-registre élémentaire RGij. Si la valeur ZE correspond à la valeur ZEj, le champ de paramètres PRq est stocké dans le sous-registre élémentaire RGij. Si par contre cette valeur est différente de ZEj, le champ de paramètres, qui est câblé également à tous les autres sous-registres élémentaires, sera stocké dans le sous-registre dont la valeur d'état correspond à celle de la directive.

Une telle variante de réalisation, qui conduit à une mise à jour partielle de certains des moyens de stockage élémentaires, permet de prévoir des registres de très grande longueur, et en tout cas de longueur supérieure à la longueur des directives. Le contenu d'un tel registre élémentaire pourra alors être complètement mis à jour en plusieurs fois.

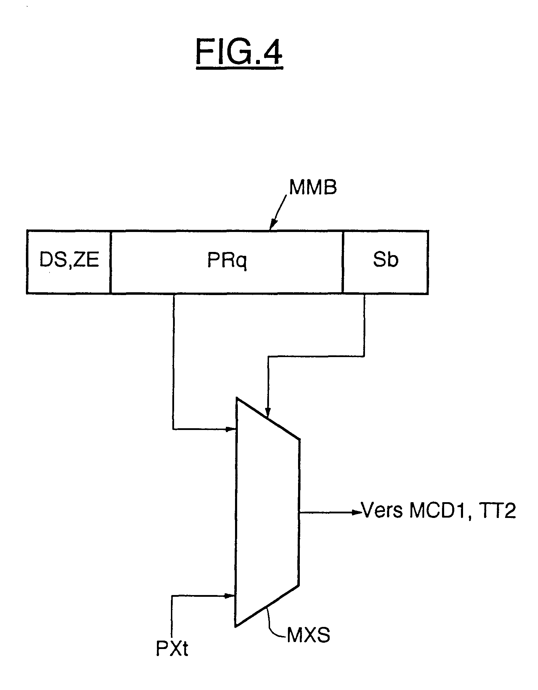

Dans la variante de mise en oeuvre illustrée sur la figure 4, on prévoit que la partie utile d'une directive comporte, outre une zone de désignation, une zone d'état et le champ de paramètres Rq, un champ de substitution Sb. Ce champ de substitution Sb va alors commander un multiplexeur de substitution MXS de façon à substituer certains au moins des bits du champ de paramètres PRq par des bits extérieurs PXt provenant par exemple du résultat d'une opération effectuée par une unité d'exécution. La sortie de ce multiplexeur MXS est alors connectée aux moyens MCD1 et au retard TT2, de façon à mettre à jour le sous-registre élémentaire désigné par la zone DS et la zone d'état ZE de la directive MMB.

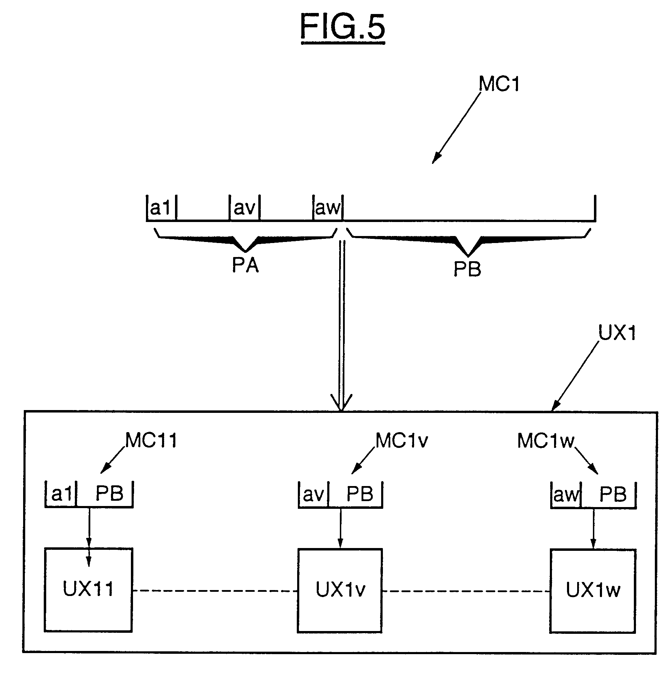

Dans la variante de réalisation illustrée sur la figure 5, l'une des unités d'exécution, par exemple l'unité UX1 se compose en fait de plusieurs sous-unités d'exécution indépendantes UX11-UX1w.

Les moyens logiques d'élaboration MEB1 affectés à l'unité UX1, élaborent alors un mot de commande MC1 comportant une première partie PA composée de bits al-aw, tous différents, et une deuxième partie PB. Les bits de la partie PA sont directement isssus du contenu du registre élémentaire RG1 tandis que les bits de la partie PB peuvent éventuellement faire l'objet d'une combinaison logique entre les bits du contenu du registre RG1 et l'instruction correspondante.

Le câblage entre la sortie des moyens MEB1 et les entrées de commande des différentes sous-unités UX11-UX1w est tel que chaque sous-unité UX1v est commandée par un mot de contrôle MC1v dont l'un des bits est égal à l'un des bits de la partie PA du mot MC1 et dont le reste des bits est formé par des bits de la partie PB. Les différents mots de contrôle MC11-MC1W se distinguent ainsi mutuellement par les bits a1-aw.

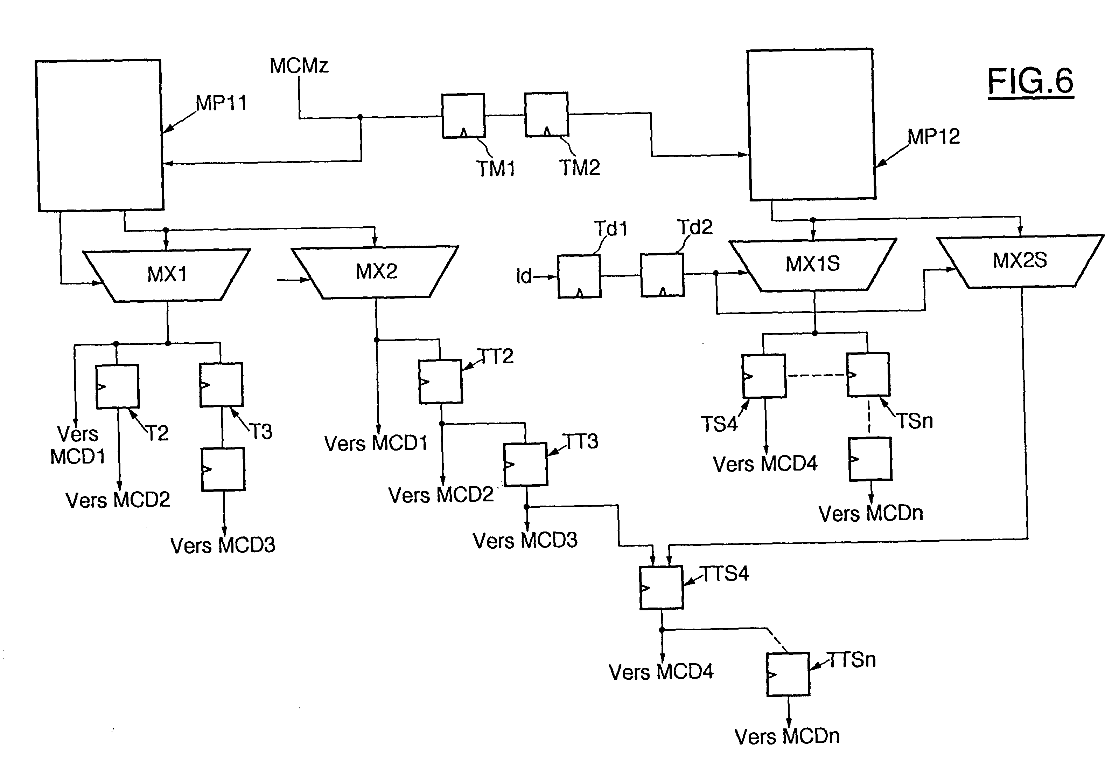

La figure 6 illustre une variante de réalisation et de mise en oeuvre de l'invention prévoyant la scission de la mémoire MP1 en deux mémoires MP11 et MP12.

Sur cette figure 6, la mémoire MP2 contenant les directives préenregistrées n'a pas été représentée à des fins de simplification, bien que cette variante de réalisation soit parfaitement compatible avec l'utilisation éventuelle d'une telle mémoire MP2, avantageusement scindée en deux parties.

Selon cette variante de réalisation, on répartit les mots de programme dans les mémoires MP11 et MP12. Plus particulièrement, chaque bloc de premiers mots d'instruction est alors constitué d'une part, par un premier sous-bloc stocké dans la mémoire MP11 et contenant des premiers mots d'instruction respectivement affectés à un premier groupe d'unités d'exécution (ici les unités UX1, UX2 et UX3), et d'autre part, par un deuxième sous-bloc stocké dans la mémoire MP12 et contenant des premiers mots d'instruction respectivement affectés aux autres unités d'exécution (ici UX4-UXn).

En d'autres termes, chaque instruction générale est ici scindée en deux sous-instructions contenant respectivement les instructions destinées à deux groupes d'unités d'exécution.

De même, la partie utile de certaines directives, en particulier celles qui sont affectées aux unités d'exécution UX4-UXn est répartie sur les deux mémoires MP11 et MP12 alors que l'identifiant ID d'une telle directive n'est stocké que dans la mémoire MP11.

On adresse alors séquentiellement la mémoire MP11 par des mots de commande MCMz et on adresse également séquentiellement la mémoire MP12 par les mêmes mots de commande MCMz mais retardés temporellement d'un nombre de retards égal au nombre d'unités d'exécution du premier groupe d'unités, diminué de un. En l'espèce, on prévoit donc que deux retards temporels amont TM1 et TM2 connectés sur l'entrée d'adressage de la mémoire MP12.

De même, on retarde temporellement, d'un même nombre de retards, (en l'espèce deux : Td1 et Td2) la délivrance de l'identifiant ID extrait de la mémoire MP11 aux multiplexeurs MX1S et MX2S qui ont des fonctions analogues à celles des multiplexeurs MX1 et MX2.

Alors que les instructions destinées aux unités d'exécution UX2 et UX3 sont, comme dans la variante illutrée sur les figures précédentes, retardées au moyen des retards T2 et T3, les instructions, extraites de la mémoire MP12, et destinées aux autres unités d'exécution sont respectivement retardées des retards TS4 à TSn.

L'homme du métier aura remarqué que compte tenu de la présence des deux retards amont TM1 et TM2 et des deux retards d'identifiant TD1 et TD2, le nombre total de retards affectés aux instructions destinées aux unités UX4 à UXn est respecté. Cependant, cette mise en facteur de deux retards en amont des mémoires, évite de disposer deux retards supplémentaires au sein de chaque groupe de retards TS4 à TSn.

En ce qui concerne les directives destinées à mettre à jour les registres élémentaires affectés aux unités d'exécution UX4-UXn, elles résultent d'une combinaison logique des bits de la partie utile contenue dans la mémoire MP11 et de la partie utile contenue dans la mémoire MP12, et ce en amont du retard TTS4. Dans l'exemple, cette combinaison logique est en fait une simple juxtaposition de bits réalisée par câblage.

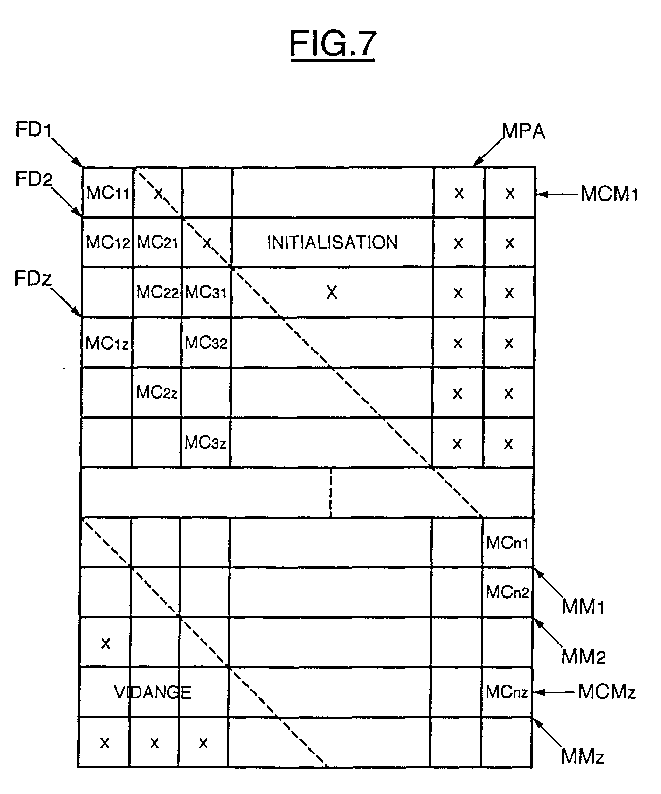

L'invention permet de minimiser la taille de la mémoire-programme par rapport à une mémoire-programme MPA dont le code programme serait structuré comme illustré sur la figure 7.

En effet, si l'on suppose par exemple, à des fins de simplification, que chaque mot de contrôle doit être codé sur b bits pour définir l'état de contrôle correspondant d'une unité d'exécution, et si l'on adaptait une structure du code-programme prévoyant, au lieu d'une mise en facteur temporelle de directives, comme dans le cas de l'invention, que chaque mode de programme comporte de façon juxtaposée n mots de contrôle MC1-MCn, chaque mot de programme aurait donc une longueur de n.b bits. Dans l'invention au contraire, chaque mot de programme, et donc la largeur de la mémoire-programme, a une taille strictement inférieure à n.b bits.

En outre, le fait, selon l'invention, d'extraire de la mémoire-programme avec un seul mot de commande MCMz, toutes les instructions relatives à toutes les unités d'exécution pour un même flux de données FDz, permet d'optimiser les capacités de mémoire de la mémoire-programme par rapport à une structure de code programme telle qu'illustrée sur la figure 7, prévoyant plusieurs mots de commande (MCM1-MCMz) pour extraire les mots de contrôle MC1z à MCMz destinés au n unités d'exécution. En fait, sur la figure 7 les mots de programme affectés à chaque flux de données sont agencés selon des diagonales de la mémoire alors qu'ils le sont selon des lignes dans l'invention.

De ce fait, dans la mémoire MPA, les premiers mots de programme correspondant à "l'initialisation du pipeline", sont partiellement inutilisés de même que les mots de programme terminaux correspondant à la "vidange du pipeline". Il en résulte donc une augmentation de la taille de la mémoire, en fait inutilisée.

## Revendications

1. Procédé de commande simultanée des états de contrôle d'une pluralité d'unités d'exécution d'un processeur programmable, lesdites unités étant agencées selon une architecture pipelinée pour effectuer sur chaque flux de données reçu par le processeur des traitements successifs au rythme d'un signal d'horloge compte tenu desdits états de contrôle définis pour ledit flux de données par des mots de contrôle, dans lequel on stocke dans une première partie (MP1) d'une mémoire-programme, une succession de mots de programme (MMz) dont chacun est constitué d'un bloc de premiers mots d'instruction (SMi) mutuellement indépendants et respectivement affectés à la pluralité d'unités d'exécution pour un flux de données considéré (FDz), ou d'un deuxième mot d'instruction affecté à au moins une unité d'exécution, le nombre des deuxièmes mots d'instruction étant inférieur à celui desdits blocs, chaque bloc ayant une taille inférieure à la somme des tailles respectives des mots de contrôle (MCi), on extrait séquentiellement de cette première partie de la mémoire-programme, au rythme du signal d'horloge, les différents mots de programme, on prévoit une pluralité de moyens de stockage élémentaires (RGi) affectés respectivement à la pluralité d'unités d'exécution, on analyse séquentiellement au rythme du signal d'horloge, l'affectation de chaque deuxième mot d'instruction extrait et on met à jour le contenu du ou des moyens de stockage élémentaires correspondants à partir de ce deuxième mot d'instruction, et on élabore (MEBi) séquentiellement chacun des mots de contrôle correspondant au flux de données considéré, à partir de la combinaison selon une relation logique affectée spécifiquement à chaque unité d'exécution, du contenu du moyen de stockage élémentaire (RGi) affecté à cette unité d'exécution (UXi) et du premier mot d'instruction correspondant (SMi) du bloc extrait ou d'un premier mot supplémentaire d'instruction (NOP) de contenu préétabli.

2. Procédé selon la revendication 1, caractérisé par le fait qu'en présence d'un mot de programme différent d'un bloc de premiers mots d'instruction, on élabore les mots de contrôle à partir de la combinaison, selon lesdites relations logiques prédéterminées, du premier mot supplémentaire d'instruction (NOP) de contenu préétabli et des contenus des moyens de stockage élémentaires.

3. Procédé selon l'une des revendications 1 ou 2, caractérisé par le fait qu'on prévoit dans la mémoire-programme une deuxième partie (MP2) contenant des deuxièmes mots supplémentaires d'instruction (MNC) affectés à au moins une unité d'exécution, et par le fait qu'en présence de certains au moins des mots de programme extraits différents d'un deuxième mot d'instruction, on extrait de la deuxième partie de la mémoire-programme un deuxième mot supplémentaire d'instruction dont on analyse séquentiellement l'affectation et à partir duquel on met à jour le contenu du ou des moyens de stockage élémentaires correspondants.

4. Procédé selon l'une des revendications 1 à 3, caractérisé par le fait qu'on modifie au moins une partie du contenu de l'un au moins des deuxièmes mots d'instruction ou de l'un au moins des deuxièmes mots supplémentaires d'instruction avant de mettre à jour le contenu du ou des moyens de stockage élémentaires correspondants.

5. Procédé selon l'une des revendications précédentes, caractérisé par le fait que l'on répartit les mots de programme dans une première sous-partie (MP11) et dans une deuxième sous-partie (MP12) ,de la première partie de la mémoire-programme, par le fait que chaque bloc de premiers mots d'instruction est constitué d'une part, par un premier sous-bloc stocké dans ladite première sous-partie et contenant des premiers mots d'instruction respectivement affectés à un premier groupe d'unités d'exécution et d'autre part, par un deuxième sous-bloc stocké dans ladite deuxième partie et contenant des premiers mots d'instruction respectivement affectés aux autres unités d'exécution, par le fait que l'on adresse séquentiellement la première sous-partie de la mémoire-programme par des mots d'adressage successifs tandis que l'on adresse séquentiellement la deuxième sous-partie de la mémoire-programme par les mêmes mots d'adressage successifs mais retardés temporellement (TN1, TN2), et par le fait que l'on met à jour certains des moyens de stockage élémentaires affectés auxdites autres unités d'exécution à partir d'une combinaison logique d'un deuxième mot d'instruction issu de la première sous-partie et d'un deuxième mot d'instruction issu de la deuxième sous-partie.

6. Dispositif de commande simultanée des états de contrôle d'une pluralité d'unités d'exécution d'un processeur programmable, lesdites unités étant agencées selon une architecture pipelinée pour effectuer sur chaque flux de données reçu par le processeur des traitements successifs au rythme d'un signal d'horloge compte tenu desdits états de contrôle définis pour ledit flux de données par des mots de contrôle, comprenant
- une mémoire-programme comportant une première partie (MP1) comportant une succession de mots de programme (MM) dont chacun est constitué d'un bloc de premiers mots d'instruction (SMi) mutuellement indépendants et respectivement affectés à la pluralité d'unités d'exécution pour un flux de données considéré, ou d'un deuxième mot d'instruction affecté à au moins une unité d'exécution, le nombre des deuxièmes mots d'instruction étant inférieur à celui desdits blocs, chaque bloc ayant une taille inférieure à la somme des tailles respectives des mots de contrôle (MCi), et
- des moyens de commande, connectés entre la mémoire-programme et les unités d'exécution, et comportant des moyens pour extraire séquentiellement de la première partie de la mémoire-programme les différents mots de programme au rythme du signal d'horloge, une pluralité de moyens de stockage élémentaires (RGi) affectés respectivement à la pluralité d'unités d'exécution, des moyens pour analyser séquentiellement au rythme du signal d'horloge, l'affectation de chaque deuxième mot d'instruction extrait et des moyens de mise à jour élémentaires du contenu du ou des moyens de stockage élémentaires correspondants à partir de ce deuxième mot d'instruction, et des moyens d'élaboration (MEB) aptes à élaborer séquentiellement chacun des mots de contrôle correspondant au flux de données considéré, à partir de la combinaison selon une relation logique affectée spécifiquement à chaque unité d'exécution, du contenu du moyen de stockage élémentaire (RGi) affecté à cette unité d'exécution (UXi) et du premier mot d'instruction correspondant du bloc extrait ou d'un premier mot supplémentaire d'instruction (NOP) de contenu préétabli.

7. Dispositif selon la revendication 6, caractérisé par le fait que les moyens d'élaboration comportent une pluralité de moyens d'élaboration élémentaires respectivement connectés à la pluralité d'unités d'exécution, par le fait que les moyens de commande comportent des premiers moyens de retard temporel élémentaires (T1-Tn) respectivement connectés entre la sortie de la mémoire-programme et certains des moyens d'élaboration élémentaires pour délivrer séquentiellement à ces moyens d'élaboration élémentaires les premiers mots d'instruction correspondants, et par le fait que les moyens d'analyse comportent des deuxièmes moyens de retard temporel élémentaires (TT1-TTn) respectivement connectés entre la sortie de la mémoire-programme et certains des moyens de stockage élémentaires.

8. Dispositif selon la revendication 6 ou 7, caractérisé par le fait que chaque mot de programme comporte un identifiant (Id) permettant de l'identifier en tant que bloc de premiers mots d'instruction ou en tant que deuxième mot d'instruction, ainsi qu'une partie utile, et par le fait que les moyens de commande comportent des moyens de sélection (MX1, MX2), commandés par l'identifiant de chaque mot de programme, et comportant une première entrée pour recevoir les mots de programme, une première sortie connectée aux moyens d'élaboration élémentaires, et une deuxième sortie connectée aux moyens de stockage élémentaires.

9. Dispositif selon la revendication 8, caractérisé par le fait que la mémoire-programme comporte une deuxième partie (MP2) contenant des deuxièmes mots supplémentaires d'instruction, et par le fait que les moyens de sélection (MX2) comportent une autre entrée connectée à la sortie de la deuxième partie de la mémoire-programme.

10. Dispositif selon l'une des revendications 8 ou 9, caractérisé par le fait que certains deuxièmes mots d'instruction ou certains deuxièmes mots supplémentaires d'instruction comportent une zone de désignation (DS) d'une ou des unités à laquelle ils sont affectés, une zone d'état (ZE), et une partie utile (PU), par le fait que le moyen de stockage élémentaire correspondant à ladite zone de désignation comporte plusieurs sous-moyens de stockage élémentaires correspondant aux différentes valeurs possibles de la zone d'état, et par le fait que les moyens de mise à jour élémentaires comportent des sous-moyens de mise à jour (MXMij) aptes à mettre à jour le contenu du sous-moyen de stockage élémentaire désigné par la zone d'état à partir de la partie utile de ce deuxième mot d'instruction ou de ce deuxième mot supplémentaire d'instruction.

11. Dispositif selon l'une des revendications 6 à 10, caractérisé par le fait que la première partie de la mémoire-programme comporte une première (NP11) et une deuxième (NP12) sous-parties, et par le fait que les moyens de commande comportent des moyens de retard temporel amont (TN1, TN2) connectés sur l'entrée d'adressage de la deuxième sous-partie.

12. Dispositif selon l'une des revendications 6 à 11, caractérisé par le fait que l'un au moins (MC1) des mots de contrôle comporte une première partie (PA) contenant plusieurs bits issus directement des bits contenus dans un moyen de stockage élémentaire et une deuxième partie (PB) dont les bits résultent d'une combinaison du contenu de ce moyen de stockage élémentaire et d'un premier mot d'instruction, par le fait que l'unité d'exécution contrôlée par ce mot de contrôle comporte des sous-unités (UX11-UX1w) d'exécution contrôlées par des sous-mots de contrôle comportant chacun un bit différent a1-aw de la première partie (PB) du mot de contrôle ainsi que les bits de la deuxième partie du mot de contrôle.

## Claims

1. Process for the simultaneous command of the control statuses of a plurality of execution units of a programmable processor, the said units being laid out as a pipelined architecture in order to perform on each data stream received by the processor successive processing operations in tempo with a clock signal having regard to the said control statuses defined for the said data stream by control words, in which in a first segment (MP1) of a program memory is stored a succession of program words (MMz) each of which consists of a block of first instruction words (SMi) which are mutually independent and respectively assigned to the plurality of execution units for a relevant data stream (FDz), or of a second instruction word assigned to at least one execution unit, the number of the second instruction words being less than that of the said blocks, each block having a size less than the sum of the respective sizes of the control words (MCi), the various program words are extracted sequentially from this first segment of the program memory, in tempo with the clock signal, a plurality of elementary storage facilities (RGi) are provided, assigned respectively to the plurality of execution units, the assignment of each extracted second instruction word is analysed sequentially in tempo with the clock signal and the content of the corresponding elementary storage facility or facilities is updated on the basis of this second instruction word, and each of the control words corresponding to the relevant data stream is computed (MEBi) on the basis of the combining according to a logic relation assigned specifically to each execution unit, of the content of the elementary storage facility (RGi) assigned to this execution unit (UXi) and of the corresponding first instruction word (SMi) of the extracted block or of a first additional instruction word (NOP) with pre-established content.

2. Process according to Claim 1, characterized in that in the presence of a program word different from a block of first instruction words, the control words are computed on the basis of the combining, according to the said predetermined logic relations, of the first additional instruction word (NOP) with pre-established content and of the contents of the elementary storage facilities.

3. Process according to one of Claims 1 or 2, characterized in that there is provided in the program memory a second segment (MP2) containing second additional instruction words (MNC) assigned to at least one execution unit, and in that in the presence of certain at least of the extracted program words different from a second instruction word, from the second segment of the program memory is extracted a second additional instruction word whose assignment is analysed sequentially and on the basis of which the content of the corresponding elementary storage facility or facilities is updated.

4. Process according to one of Claims 1 to 3, characterized in that at least a segment of the content of one at least of the second instruction words or of one at least of the second additional instruction words is modified before updating the content of the corresponding elementary storage facility or facilities.

5. Process according to one of the preceding claims, characterized in that the program words are apportioned into a first sub-segment (MP11) and into a second sub-segment (MP12), of the first segment of the program memory, in that each block of first instruction words consists on the one hand of a first sub-block stored in the said first sub-segment and containing first instruction words assigned respectively to a first group of execution units and on the other hand of a second sub-block stored in the said second segment and containing first instruction words assigned respectively to the other execution units, in that the first sub-segment of the program memory is addressed sequentially by successive addressing words whilst the second sub-segment of the program memory is addressed sequentially by the same successive addressing words but temporally delayed (TN1, TN2), and in that some of the elementary storage facilities assigned to the said other execution units are updated on the basis of a logical combining of a second instruction word emanating from the first sub-segment and of a second instruction word emanating from the second sub-segment.

6. Device for the simultaneous command of the control statuses of a plurality of execution units of a programmable processor, the said units being laid out as a pipelined architecture in order to perform on each data stream received by the processor successive processing operations in tempo with a clock signal having regard to the said control statuses defined for the said data stream by control words, comprising
- a program memory including a first segment (MP1) including a succession of program words (MM) each of which consists of a block of first instruction words (SMi) which are mutually independent and respectively assigned to the plurality of execution units for a relevant data stream, or of a second instruction word assigned to at least one execution unit, the number of the second instruction words being less than that of the said blocks, each block having a size less than the sum of the respective sizes of the control words (MCi), and
- command facilities, connected between the program memory and the execution units, and including facilities for extracting sequentially from the first segment of the program memory the various program words in tempo with the clock signal, a plurality of elementary storage facilities (RGi) assigned respectively to the plurality of execution units, facilities for analysing sequentially in tempo with the clock signal, the assignment of each second extracted instruction word and elementary facilities for updating the content of the corresponding elementary storage facility or facilities on the basis of this second instruction word, and computational facilities (MEB) able to compute sequentially each of the control words corresponding to the relevant data stream, on the basis of the combining according to a logic relation assigned specifically to each execution unit, of the content of the elementary storage facility (RGi) assigned to this execution unit (UXi) and of the corresponding first instruction word of the extracted block or of a first additional instruction word (NOP) with pre-established content.

7. Device according to Claim 6, characterized in that the computational facilities include a plurality of elementary computational facilities connected respectively to the plurality of execution units, in that the command facilities include first elementary time delay facilities (T1-Tn) respectively connected between the output of the program memory and some of the elementary computational facilities so as to forward sequentially to these elementary computational facilities the first corresponding instruction words, and in that the analysis facilities include second elementary time delay facilities (TT1-TTn) respectively connected between the output of the program memory and some of the elementary storage facilities.

8. Device according to Claim 6 or 7, characterized in that each program word includes an identifier (Id) allowing its identification as either a block of first instruction words or as a second instruction word, as well as a useful segment, and in that the command facilities include selection facilities (MX1, MX2), controlled by the identifier of each program word, and including a first input for receiving the program words, a first output connected to the elementary computational facilities, and a second output connected to the elementary storage facilities.

9. Device according to Claim 8, characterized in that the program memory includes a second segment (MP2) containing second additional instruction words, and in that the selection facilities (MX2) include another input connected to the output of the second segment of the program memory.

10. Device according to one of Claims 8 or 9, characterized in that certain second instruction words or certain second additional instruction words include a designation area (DS) for one or more units to which they are assigned, a status area (ZE), and a useful segment (PU), in that the elementary storage facility corresponding to the said designation area includes several elementary sub-storage facilities corresponding to the various possible values of the status area, and in that the elementary updating facilities include updating subfacilities (MXMij) able to update the content of the elementary sub-storage facility designated by the status area on the basis of the useful segment of this second instruction word or of this second additional instruction word.

11. Device according to one of Claims 6 to 10, characterized in that the first segment of the program memory includes a first (NP11) and a second (NP12) subsegments, and in that the command facilities include upstream time delay facilities (TN1, TN2) connected to the addressing input of the second sub-segment.

12. Device according to one of Claims 6 to 11, characterized in that one at least (MC1) of the control words includes a first segment (PA) containing several bits emanating directly from the bits contained in an elementary storage facility and a second segment (PB) whose bits result from a combining of the content of this elementary storage facility and of a first instruction word, in that the execution unit controlled by this control word includes execution sub-units (UX11-UX1w) controlled by control sub-words each including a different bit a1-aw of the first segment (PB) of the control word as well as the bits of the second segment of the control word.

## Patentansprüche

1. Verfahren zur simultanen Steuerung der Steuerzustände einer Vielzahl von Verarbeitungseinheiten eines programmierbaren Prozessors, wobei die Einheiten gemäß einer pipelineartigen Architektur angeordnet sind, um auf jedem Datenstrom, der vom Prozessor erhalten wird, aufeinanderfolgende Verarbeitungen im Rhythmus eines Taktsignals auszuführen, unter Berücksichtigung der Steuerzustände, die für den Datenfluß durch Kontrollwörter definiert sind, in dem in einem ersten Teil (MP1) eines Speicherprogramms eine Aufeinanderfolge von Programmwörtern (MMz) gespeichert werden, wovon jedes aus einem ersten Block von ersten Befehlswörtern (SMi) gebildet ist, die voneinander unabhängig sind und jeweils der Mehrzahl von Verarbeitungseinheiten für einen gegebenen Datenfluß (FDz) zugewiesen sind, oder eines zweiten Befehlswortes, das mindestens einer Verarbeitungseinheit zugeordnet ist, wobei die Anzahl von zweiten Befehlswörtern geringer als diejenige der Blöcke ist, und da jeder Block einen Umfang aufweist, der geringer als die Summe der entsprechenden Umfänge der Kontrollwörter (MCi) ist, werden nacheinander aus diesem ersten Teil des Speicherprogramms im Rhythmus des Taktsignals die verschiedenen Programmwörter abgerufen, es wird eine Vielzahl von grundlegenden Speichermitteln (RGi) vorgesehen, die jeweils der Vielzahl von Verarbeitungseinheiten zugeordnet sind, es wird nacheinander im Rhythmus des Taktsignals die Zuweisung jedes zweiten abgerufenen Befehlswortes analysiert und es wird der Inhalt des oder der entsprechenden grundlegenden Speichermittel auf der Grundlage dieses zweiten Befehlswortes aktualisiert und es wird nacheinander (MEBi) jedes der Kontrollwörter, die dem gegebenen Datenfluß entsprechen, auf der Grundlage der Verbindung gemäß einer logischen Beziehung, die spezifisch jeder Ausführungseinheit zugewiesen ist, des Inhalts des grundlegenden Speichermittels (RGi) erstellt, der dieser Verarbeitungseinheit (UXi) und dem ersten entsprechenden (SMi) Befehlswort des abgerufenen Blockes oder eines ersten zusätzlichen Befehlswortes (NOP) des vorher festgesetzten Inhalts zugeordnet ist.

2. Verfahren nach Anspruch 1, dadurch gekennzeichnet, daß in Anwesenheit eines Programmwortes, das von einem Block von ersten Befehlswörtern verschieden ist, Kontrollwörter auf der Grundlage der Verbindung gemäß der vorher festgesetzten logischen Beziehungen, des ersten zusätzlichen Befehlswortes (NOP) mit vorher festgesetztem Inhalt und der Inhalte der grundlegenden Speichermittel erstellt werden.

3. Verfahren nach einem der Ansprüche 1 oder 2, dadurch gekennzeichnet, daß im Speicherprogramm ein zweiter Teil (MP2) vorgesehen ist, der zusätzliche zweite Befehlswörter (MNC) umfaßt, die mindestens einer Verarbeitungseinheit zugewiesen sind, und daß in Anwesenheit wenigstens gewisser der abgerufenen Programmwörter, die von einem zweiten Befehlswort verschieden sind, aus dem zweiten Teil des Speicherprogramms ein zweites zusätzliches Befehlswort abgerufen wird, von dem nacheinander die Zuweisung analysiert wird, und auf Grundlage dessen der Inhalt des oder der entsprechenden grundlegenden Speichermittel aktualisiert wird.

4. Verfahren nach einem der Ansprüche 1 bis 3, dadurch gekennzeichnet, daß mindestens ein Teil des Inhalts mindestens eines der zweiten Befehlswörter oder mindestens eines der zusätzlichen zweiten Befehlswörter verändert wird, bevor der Inhalt des oder der entsprechenden grundlegenden Speichermittel aktualisiert wird.

5. Verfahren nach einem der vorhergehenden Ansprüche, dadurch gekennzeichnet, daß die Programmwörter in einem ersten Unterteil (MP11) und in einem zweiten Unterteil (MP12) des ersten Teils des Speicherprogramms verteilt werden, daß jeder Block von ersten Befehlswörtern einerseits einen ersten Unterblock umfaßt, der im ersten Unterteil gespeichert wird und erste Befehlswörter umfaßt, die jeweils einer ersten Gruppe von Verarbeitungseinheiten zugewiesen sind, und andererseits einen zweiten Unterblock, der im zweiten Teil gespeichert ist, und der erste Befehlswörter enthält, die jeweils den anderen Verarbeitungseinheiten zugewiesen sind, durch die Tatsache, daß nacheinander der erste Unterteil des Speicherprogramms durch aufeinanderfolgende Adressierungswörter adressiert wird, während der zweite Unterteil des Speicherprogramms nacheinander von den gleichen aufeinanderfolgenden Adressierungswörtern, aber zeitlich verzögert (TN1, TN2) adressiert wird, und daß gewisse der grundlegenden Speichermittel, die den anderen Verarbeitungseinheiten zugewiesen sind auf der Grundlage einer logischen Verbindung eines zweiten Befehlswortes, das aus dem ersten Unterteil stammt, und eines zweiten Befehlswortes, das aus dem zweiten Unterteil stammt, aktualisiert werden.

6. Vorrichtung zur gleichzeitigen Steuerung der Steuerzustände einer Vielzahl von Verarbeitungseinheiten eines programmierbaren Prozessors, wobei die Einheiten gemäß einer pipelineartigen Architektur angeordnet sind, um auf jeden Datenfluß, der vom Prozessor empfangen wird, aufeinanderfolgende Verarbeitungen im Rhythmus eines Taktsignals durchzuführen, unter Berücksichtigung der Steuerzustände, die für den Datenfluß von den Kontrollwörtern definiert werden, und die folgendes umfassen:
- ein Speicherprogramm, das einen ersten Teil (MP1) umfaßt, der eine Aufeinanderfolge von Programmwörtern (MM) umfaßt, von denen jedes einen Block von ersten Befehlswörtern (SMi) aufweist, die voneinander unabhängig sind und jeweils der Vielzahl von Verarbeitungseinheiten für einen gegebenen Datenfluß zugewiesen sind, oder ein zweites Befehlswort, das mindestens einer Verarbeitungseinheit zugewiesen ist, wobei die Anzahl der zweiten Befehlswörter geringer als diejenige der Blöcke ist, wobei jeder Block einen Umfang aufweist, der geringer als die Summe der entsprechenden Umfänge der Kontrollwörter (MCi) ist, und
- Steuerungsmittel, die zwischen dem Speicherprogramm und den Verarbeitungseinheiten verbunden bzw. vorgesehen sind und Mittel umfassen, um nacheinander vom ersten Teil des Speicherprogramms die verschiedenen Programmwörter im Rhythmus des Taktsignals abzurufen, eine Vielzahl von grundlegenden Speichermitteln (RGi), die jeweils der Vielzahl von Verarbeitungseinheiten zugeordnet sind, Mittel, um nacheinander im Rhythmus des Taktsignals die Zuordnung jedes zweiten abgerufenen Befehlswortes zu analysieren und grundlegende Mittel zur Aktualisierung des Inhalts oder entsprechende Mittel zur grundlegenden Speicherung auf der Grundlage dieses zweiten Befehlswortes und Erstellungsmittel (MEB), die dazu geeignet sind, nacheinander jedes der Kontrollwörter zu erstellen, die dem gegebenen Datenfluß entsprechen, auf der Grundlage der Verbindung gemäß einer logischen Beziehung, die spezifisch jeder Verarbeitungseinheit zugewiesen ist, des Inhalts des grundlegenden Speichermittels (RGi), das dieser Verarbeitungseinheit (Uxi) und dem ersten Befehlswort zugewiesen ist, das dem abgerufenen Block oder einem ersten zusätzlichen Befehlswort (NOP) mit vorher bestimmtem Inhalt entspricht.

7. Vorrichtung nach Anspruch 6, dadurch gekennzeichnet, daß die Erstellungsmittel, die eine Vielzahl von grundlegenden Erstellungsmitteln enthalten, die jeweils mit der Vielzahl von Verarbeitungseinheiten verbunden sind, daß die Steuerungsmittel erste grundlegende Mittel zur zeitlichen Verzögerung (T1-Tn) umfassen, die jeweils zwischen dem Ausgang des Speicherprogramms und gewisser der grundlegenden Erstellungsmittel verbunden sind, um nacheinander an diese grundlegenden Erstellungsmittel die entsprechenden ersten Befehlswörter zu liefern, und daß die Analysemittel zweite grundsätzliche Mittel zur zeitlichen Verzögerung (TT1-TTn) umfassen, die jeweils zwischen dem Ausgang des Speicherprogramms und gewisser der grundlegenden Speichermittel verbunden sind.

8. Vorrichtung nach Anspruch 6 oder 7, dadurch gekennzeichnet, daß jedes Programmwort einen Identifizierer (Id) umfaßt, der es erlaubt, es als Block von ersten Befehlswörtern oder als zweites Befehlswort zu identifizieren, ebenso wie einen nützlichen Teil, und daß die Steuerungsmittel Mittel zur Auswahl (MX1, MX2) umfassen, die vom Identifizierer jedes Programmwortes gesteuert werden, und einen ersten Eingang umfassen, um die Programmwörter zu empfangen, einen ersten Ausgang, der mit den grundlegenden Erstellungsmitteln verbunden ist, und einen zweiten Ausgang, der mit den grundlegenden Speichermitteln verbunden ist.

9. Vorrichtung nach Anspruch 8, dadurch gekennzeichnet, daß das Speicherprogramm einen zweiten Teil umfaßt (MP2), der zweite zusätzliche Befehlswörter umfaßt, und daß die Mittel zur Auswahl (MX2) einen anderen Eingang umfassen, der mit dem Ausgang des zweiten Teils des Speicherprogramms verbunden ist.

10. Vorrichtung nach einem der Ansprüche 8 oder 9, dadurch gekennzeichnet, daß gewisse zweite Befehlswörter oder gewisse zweite zusätzliche Befehlswörter einen Bezeichnungsbereich (DS) der Einheit oder der Einheiten umfassen, der sie zugewiesen sind, einen Zustandsbereich (ZE) und einen nützlichen Teil (PU), daß das grundlegende Speichermittel, das dem Bezeichnungsbereich entspricht, mehrere grundlegende Unterspeichermittel umfaßt, die den verschiedenen möglichen Werten des Zustandsbereichs entsprechen, und daß die grundlegenden Aktualisierungsmittel Unteraktualisierungsmittel (MXMij) umfassen, die dazu in der Lage sind, den Inhalt des grundlegenden Unterspeichermittels, der vom Zustandsbereich auf der Grundlage des nützlichen Teils dieses zweiten Befehlswortes oder dieses zweiten zusätzlichen Befehlswortes bezeichnet ist, zu aktualisieren.

11. Vorrichtung nach einem der Ansprüche 6 bis 10, dadurch gekennzeichnet, daß der erste Teil des Speicherprogramms einen ersten (NP11) und einen zweiten (NP12) Unterteil umfaßt, und daß die Steuerungsmittel Mittel zur zeitlichen Verzögerung aufwärts (TN1, TN2) umfassen, die auf dem Adressierungseingang des zweiten Unterteils verbunden sind.

12. Vorrichtung nach einem der Ansprüche 6 bis 11, dadurch gekennzeichnet, daß mindestens eines (MC1) der Kontrollwörter einen ersten Teil (PA) umfaßt, der mehrere Bits aufweist, die direkt den Bits entstammen, die in einem grundlegenden Speichermittel enthalten sind, und einen zweiten Teil (PB), dessen Bits sich als eine Verbindung des Inhalts dieses grundlegenden Speichermittels und eines ersten Befehlswortes erweisen, daß die Verarbeitungseinheit, die von diesem Kontrollwort kontrolliert wird, Unterausfiihrungseinheiten (UX11-UX1w) umfaßt, die von Unterkontrollwörtern kontrolliert werden, von denen jedes ein verschiedenes Bit a1-aw des ersten Teils (PB) des Kontrollwortes sowie die Bits des zweiten Teils des Kontrollwortes umfaßt
